# DEMANDE DE BREVET EUROPEEN

(11) **EP 3 651 068 A1**
(43) Date de publication de la demande: **13.05.2020**
(21) Numéro de dépôt: 18306481.5
(22) Date de dépôt: 12.11.2018
(51) Int. Cl.: G06K 19/077

(54) **PROCÉDÉ DE RÉALISATION D'UN INSERT ÉLECTRONIQUE POUR SUPPORT PORTABLE MULTI-COMPOSANTS ET INSERT OBTENU**

(71) Demandeur: Thales Dis France SA, 92190 Meudon (FR)
(72) Inventeur: ROBLES, Laurence, 92190 Meudon (FR); ROUSSEL, François, 92190 Meudon (FR); BAJOLLE, Antoine, 92190 Meudon (FR); FIDALGO, Jean-Christophe, 92190 Meudon (FR)
(74) Mandataire: Milharo, Emilien

(57) **Abrégé**

L'invention concerne un procédé de réalisation d'un insert électronique (30-33) pour support portable multi-composants, ledit procédé comportant une étape de fixation d'un circuit imprimé (2, 2a) dans un logement ou un emplacement (L, L2) d'une structure-cadre (1, D, 3B), des ponts maintenant en position ledit circuit à la structure-cadre ; Le procédé est caractérisé en ce que lesdits ponts (P1-P7) comprennent des conducteurs électriques.

L'invention concerne également l'insert correspondant et un dispositif portable contenant l'insert.

## Description

L'invention concerne un procédé de fabrication d'inserts électroniques pour support portable complexes multi-composants.

De tels inserts entrent dans la fabrication de supports portables complexes tel des cartes à puce multi-composants à l'aide d'un procédé de stratification ou lamination à chaud ou à froid incorporant des inserts (inlay en anglais) électroniques.

En particulier, le procédé visé de réalisation d'insert comporte une étape de fixation d'un circuit imprimé dans un logement ou emplacement d'une structure-cadre, des ponts positionnant ledit circuit relativement à la structure-cadre.

Le circuit imprimé visé par l'invention (et faisant partie de la description des figures) peut être relié ou supporter des composants divers tels qu'une antenne de communication radiofréquence et/ou un clavier et/ou un microcircuit radiofréquence, un afficheur (ou écran), un capteur biométrique, un interrupteur, des générateur de numéro à usage unique (OTP), un module de carte à puce à contact ou sans-contact. Le circuit imprimé peut comprendre de préférence un substrat mince isolant de moins de 50 µm et flexible. L'insert peut comporter des éléments de stockage d'énergie comme une batterie, une super capacité. Le circuit imprimé visé peut couvrir une surface supérieure à au moins deux modules à contacts de carte à puce (voire 4 ou plus). Par exemple, il peut s'étendre sur une majeure surface de la carte à puce (avoir une longueur d'environ 2-7 cm et une largeur d'environ 2-4 cm)

L'insert peut comporter une antenne connectée à un microcircuit électronique. Il peut être destiné à former, notamment par lamination avec d'autres feuilles ou par surmoulage avec de la résine, un support portable multi-composants radiofréquence tel qu'une couverture, une feuille de passeport électronique, une carte d'identité, une carte à puce bancaire, tout produit doté d'une fonction de communication radiofréquence. L'épaisseur de l'insert présente donc de l'importance.

L'insert forme en quelque sorte un produit intermédiaire ou sous-produit d'un produit final multi-composants.

### Art antérieur

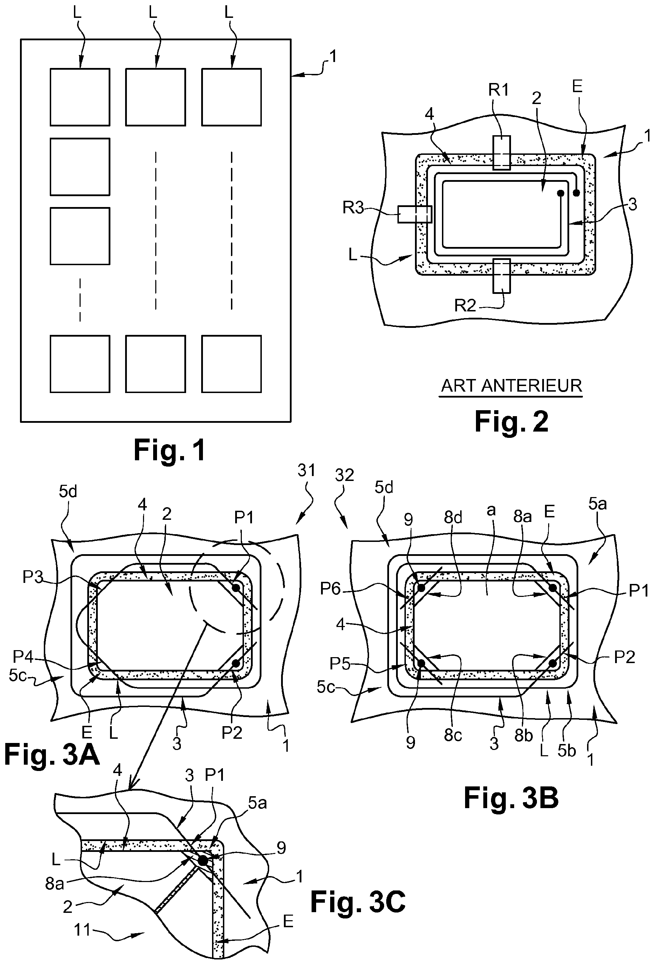

Le brevet EP2036008 (B1) décrit un procédé pour réaliser un insert destiné à la fabrication de supports multicomposants tels des cartes à puces électroniques. Les inserts obtenus selon ce procédé peuvent être fabriqués à partir de feuilles avec par exemple plusieurs rangées de plusieurs dizaines de cartes par feuille, comme représenté sur la figure 1 et 2.

Le procédé utilise une plaque avec une pluralité d'ouvertures (ou de logements) abritant une pluralité de modules électroniques multi-composants. Ces modules électroniques sont assemblés à la plaque avec des ponts isolants électriquement et en laissant une fenêtre sur la majeure partie de l'entourage du module électronique. Par la suite, un matériau de remplissage remplit la majeure partie de l'espace restant dans les ouvertures et sur le module électronique, pour former après découpe un produit intermédiaire.

Le brevet US8305764 (B2) décrit un procédé similaire au brevet ci-dessus. Il illustre le fait que les inserts connus pour cartes radiofréquences sont généralement formées avec l'antenne de communication principale, par exemple pour des transactions bancaires (type EMV), sur le circuit imprimé flexible avant d'être incorporé dans un logement de structure cadre (ou plaque mentionnée précédemment).

Le brevet EP2232963 (B1) décrit un procédé de réalisation d'un dispositif comportant au moins deux composants distincts interconnectés sur un substrat par au moins un fil d'interconnexion. Le procédé prévoit une réalisation du fil d'interconnexion par dépôt de fil individuel sur le substrat selon un motif d'interconnexion prédéfini ; Le fil comporte au moins une portion terminale de connexion exposée sur le substrat et au moins un contact d'un composant est reporté en regard de la portion terminale puis connecté à cette portion terminale.

Ce procédé n'est pas adapté à l'intégration d'un circuit imprimé de grandes dimensions dans un insert et dans lequel un jeu est nécessaire autour du circuit imprimé. De plus pour positionner le fil en regard des plages de connexion, il faut dans ce cas un chevauchement entre le circuit imprimé et le substrat comportant la fenêtre. Cela risque de créer des contraintes pouvant générer un défaut de planéité ou des défaillances lors des sollicitations mécaniques

Le brevet US6233818 (B1) décrit un procédé de réalisation d'un support comportant une puce radiofréquence connectée à une antenne. Il décrit de réaliser l'antenne par incrustation de fil conducteur sur le support et de faire survoler le fil d'antenne au-dessus d'une cavité de réception de la puce et des plots de connexion de la puce. Le fil est incrusté avant et après la cavité. Les plots accèdent au fil en passant par la cavité. La connexion électrique du fil aux plots s'effectue après par thermocompression ou ultrasons.

Ce procédé est focalisé sur des connexions de puces de circuit intégré à une antenne filaire. Il est éloigné structurellement d'un circuit imprimé de grandes dimensions incorporé dans une structure-cadre qui en outre, généralement, comprend déjà la fonction radiofréquence comme dans le brevet US8305764 (B2).

### Problème technique

La fabrication d'un support électronique multi-composants tel qu'une carte à afficheur et/ou d'une carte biométrique est assez complexe et onéreuse. Elle nécessite plusieurs opérations manuelles qui rendent la fabrication en volume, difficile et coûteux. En particulier, une des options du procédé du brevet EP2036008 peut consister à utiliser des portions de rubans adhésifs (fig.2) qui empêchent tout mouvement du circuit imprimé flexible dans son logement de la structure-cadre, au cours de l'écoulement de résine sur circuit imprimé et autour de lui ou manipulation de la structure-cadre. Le nombre minimal de portions de ruban adhésif est la plupart du temps trois (fig.2).
La fixation de ces portions de ruban adhésif est essentiellement manuelle et le débit est faible.

Par ailleurs, avec la pratique du brevet US8305764 (B2) ci-dessus, dans laquelle les inserts radiofréquences sont généralement formés avec l'antenne de communication principale dans le circuit imprimé destiné à être intégré dans une structure cadre, l'antenne a généralement une périphérie la plus grande possible pour des raisons de performance ; Cela engendre un circuit imprimé flexible de très grande surface avec un coût résultant important car généralement réalisé par gravure de cuivre. L'antenne est pratiquement proche et en retrait de la périphérie externe d'une structure-cadre (ou bord de carte obtenue avec l'insert). Du fait de la surface importante du circuit imprimé, il y a également des difficultés de manipulation avec des machines de l'industrie de la carte à puce non adaptées à l'intégration dans un insert.

Notamment pour les raisons ci-dessus, s'agissant d'un support multi-composants radiofréquence, il est aujourd'hui incompatible de pouvoir réaliser un insert électronique de faible épaisseur, bas coût et qui en même temps possède de bonnes propriétés de communication, notamment de portée.

En particulier, la connexion de l'antenne à un microcircuit radiofréquence est assez complexe à réaliser, l'antenne étant au coeur de la carte en profondeur pour des raisons de visuel final du produit.

### Résumé de l'invention

L'invention a pour objectif de résoudre les problèmes susvisés.

L'invention propose un procédé de fabrication permettant une automatisation et simplification des étapes de fabrication d'un insert multi-composants pour support à puce complexe (avec ou sans antenne).

L'invention vise également à résoudre les inconvénients précités du coût et performance de la fonction radiofréquence dans un insert multi-composants.

L'invention vise également à faciliter la connexion d'une antenne au circuit imprimé flexible ou microcircuit dans le cadre de la réalisation d'un insert électronique radiofréquence de faible épaisseur et bas coût présentant de bonnes performances de communication notamment de portée.

Les inventeurs ont constaté qu'il est préférable de ne pas mettre une antenne de communication principale (de grande surface), sur le circuit imprimé flexible pour des raisons de coût et de performances radiofréquences mais sur le cadre contenant le circuit imprimé. Cela permet aussi d'avoir un circuit imprimé flexible d'encombrement plus réduit plus facilement intégrable dans un insert.

De préférence, l'antenne est réalisée sous forme de fil conducteur, notamment par technique bien connue d'incrustation de fil, plutôt que via une gravure électrochimique, ce qui améliore encore plus la conductivité électrique et les performances.

Selon un mode préféré de mise en oeuvre, l'invention prévoit d'utiliser la technique d'incrustation par ultrasons de fil conducteur pour maintenir en position des circuits imprimés flexibles multi-composants, relativement à une structure-cadre, notamment dans un logement (fenêtre ou emplacement) d'une structure-cadre ou plaque.

A cet effet, l'invention a pour objet un procédé de réalisation d'un insert électronique pour support portable multi-composants, ledit procédé comportant une étape de fixation d'un circuit imprimé multi-composants, dans un logement ou un emplacement d'une structure-cadre, des ponts positionnant ledit circuit imprimé par rapport à la structure-cadre ; Le procédé est caractérisé en ce que lesdits ponts comprennent des conducteurs électriques.

Selon d'autres caractéristiques :
- La structure-cadre comprend un circuit électrique / électronique avec des pistes conductrices et en ce que lesdits ponts et lesdites pistes sont formés avec la même technique ; Le cas échéant, au moins lesdites pistes du circuit électrique ou électronique et lesdits ponts conducteurs sont formés par un seul fil continu suivant un seul parcours ;
- Au moins lesdites pistes et lesdits ponts conducteurs peuvent être formés par une même technique filaire ; (incrustation, collage, broderie de fils conducteurs électriques...) ;
- Le circuit électrique / électronique peut être choisi avantageusement parmi au moins une piste d'antenne. Cela permet des réductions de coût, d'encombrement du circuit imprimé et de meilleure performance de l'antenne (surtout quand elle est de type filaire versus gravée). Le fait de placer l'antenne sur le cadre plutôt qu'à l'intérieur d'un cadre permet aussi d'étendre sa surface de couplage et ses performances. La surface du cadre, généralement inutilisée dans l'art antérieur, permet grâce à l''invention d'optimiser la surface disponible de l'insert pour placer des éléments électriques / électroniques.

Ainsi, des éléments de circuit imprimé peuvent être déchargés du circuit imprimé au profit d'autres éléments. En particulier, il est possible de placer une antenne ou interface de communication secondaire également sur la structure-cadre entourant le circuit imprimé. Cet interface secondaire peut servir à personnaliser en sans-contact, des éléments de sécurité / microcontrôleurs, etc. distincts d'un microcontrôleur radiofréquence relié à l'antenne principale.
- Alternativement, le circuit électrique / électronique sur le cadre peut être choisi parmi une plage d'interconnexion ou de liaison de composant, une plaque de condensateur, un composant électronique ;
- La liaison électrique des ponts avec le circuit imprimé est réalisée de préférence par une soudure. Cette dernière peut être obtenue notamment par thermocompression, ultrasons, brasure ou autre type ;
- Le procédé peut comprendre selon un mode préféré, une étape de formation d'une structure-cadre comprenant un logement (ou emplacement) de circuit imprimé et des ponts conducteurs électriques s'étendant à l'intérieur ou au-dessus de l'emplacement ou du logement du circuit imprimé ;
- Le circuit électrique / électronique (2, 2a) sur ladite structure cadre peut comprendre au moins une piste d'antenne, ladite antenne s'étendant en bordure périphérique de la structure cadre ;
- Les ponts peuvent être formés en passant au-dessus de l'emplacement ou d'au moins une fenêtre (ouverture) de ladite structure-cadre ; De préférence les ponts se fixent au moins par incrustation du côté de la structure-cadre ;

Le procédé peut comprendre les étapes suivantes :
- de formation d'un parcours de circuit filaire sur une feuille de base à l'extérieur ainsi qu'à l'intérieur de logement (ou emplacement) du circuit imprimé,
- de formation dudit logement (ou emplacement) de circuit imprimé de ladite feuille de base (par exemple par découpe ou poinçonnage) ;
- de découpe du parcours filaire à l'intérieur du logement et en retrait de sa limite de manière à présenter une extrémité libre de fil, formant un pont, qui s'étend en regard du logement (ou emplacement) ;

Le procédé peut comprendre les étapes suivantes :
- Réalisation de zones évidées ou poinçonnées à des endroits prédéterminés (d'une première feuille de base) ou d'une feuille de base et d'une feuille de recouvrement ;
- Réalisation d'au moins un circuit filaire sur la première feuille de base en passant au-dessus des zones évidées ou poinçonnées ;
- Réalisation d'au moins une structure-cadre par formation d'au moins un logement de circuit imprimé dans ladite feuille de base, en laissant des ponts conducteurs (P1a-P3a) s'étendre dans chaque logement;
- Insertion et connexion de circuit imprimé dans chaque logement ;
- Distribution d'une résine ou lamination d'une feuille sur le circuit imprimé dans chaque logement.

Le procédé peut comprendre en outre l'étape d'assemblage de ladite feuille de base avec ladite feuille de recouvrement en superposant leurs zones évidées respectives.

L'invention a également pour objet un insert correspondant au procédé. L'invention concerne également un dispositif ou support portable multi-composants, tel une carte à puce sans contact, un passeport comprenant l'insert ci-dessus ou obtenu selon le procédé ci-dessus.

D'autres particularités et avantages de l'invention apparaîtront à la lecture de la description, qui suit, donnée à titre d'exemple illustratif et non limitatif, et faite en référence aux figures annexées pour lesquelles :
- La figure 1 illustre une vue schématique d'une feuille (structure-cadre) présentant des logements de réception de circuit imprimé ;
- La figure 2 illustre une fixation d'un circuit imprimé 2 dans un logement L de la feuille 1A ;
- La figure 3A illustre une fixation d'un circuit imprimé 2 dans un logement L de la feuille 1 selon un premier mode de mise en oeuvre du procédé de l'invention;
- La figure 3B illustre une fixation d'un circuit imprimé 2 dans un logement L de la feuille 1 selon une variante du premier mode de mise en oeuvre du procédé de l'invention ;
- La figure 3C illustre un agrandissement de la connexion du pont P1 ;
- La figure 3D est sensiblement identique à la figure 3A mais en illustrant une étape de découpe des bouts de fil parasites, existants après des points de connexion électriques vers une portion terminale de l'antenne;
- La figure 4 illustre un insert de carte à puce avec un circuit imprimé fixé et connecté dans un logement L2 de structure-cadre 1B selon un second mode de mise en oeuvre du procédé de l'invention ;
- La figure 5 illustre une vue en coupe selon A-A de la figure précédente ;
- Les figures 6 à 11 illustrent des étapes successives de fabrication de l'insert selon le second mode de mise en oeuvre de l'invention ;
- La figure 12 illustre un organigramme correspondant sensiblement aux étapes du procédé de l'invention selon le premier mode (figs. 3A-3C);
- La figure 13 illustre un organigramme correspondant sensiblement aux étapes du procédé de l'invention des figures 6-11;

Les figures 1 et 2 illustrent l'art antérieur ; Elles décrivent à la figure 1 la fourniture d'une feuille 1 (ou plaque) de plastique comportant une pluralité de logements L (fenêtres ou évidements) pour la réception d'un circuit imprimé 2 dans chaque logement. Chaque circuit imprimé porte sur un substrat isolant une antenne principale gravée 3 en bordure périphérique du substrat. Une espace 4 entoure chaque circuit imprimé dans son logement. Des rubans adhésifs R1, R2, R3 sont utilisés pour positionner et fixer mécaniquement chaque circuit imprimé 2 dans son logement L. Les rubans forment des ponts isolants entre les bords des logements et chaque circuit imprimé.

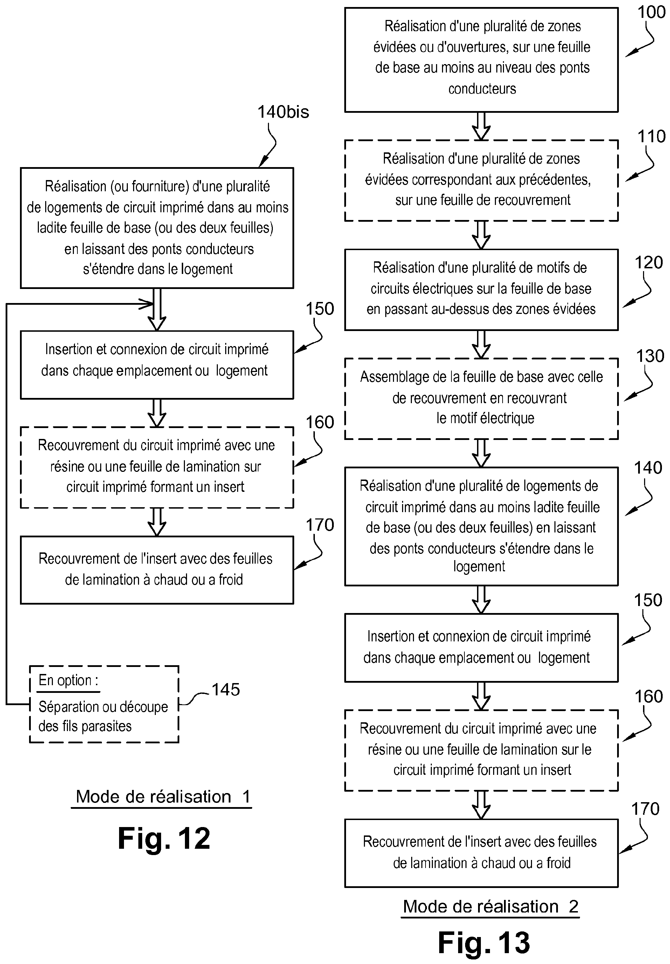

Le procédé de réalisation d'un insert électronique pour support portable multi-composants est expliqué de la manière suivante :
- L'accent est mis sur des étapes communes (ou similaires) ainsi des différences et variantes diverses d'exécution, (avant de détailler un déroulé continu de leurs étapes propres des figures 12 et 13).

Le procédé de l'invention selon les deux modes (premier et second), comporte comme l'art antérieur ci-dessus, une étape de fixation d'un circuit imprimé dans un logement ou un emplacement d'une structure-cadre (ou plaque), des ponts positionnant ledit circuit à la structure-cadre.

Dans l'exemple fig. 3A, pour réaliser une carte stratifiée intégrant le circuit imprimé souple, un circuit imprimé 2 souple est tout d'abord fixé dans une fenêtre L d'une feuille de matière plastique 1 (désignée par la suite indifféremment par feuille de base ou « structure-cadre ».

La feuille 1 peut avoir au moins un logement L ou de préférence une pluralité de logements L pour former un ensemble d'inserts multi-composants électroniques après individualisation par découpe.

Les circuits imprimés 2 au sens de l'invention peuvent comprendre un film (ou substrat) flexible portant plusieurs composants électroniques et/ou électriques qui peuvent fixés ou connectés avec des procédés connus tels que SMD, COB ou Flip chip (puce retournée).

De préférence, le film-support du circuit imprimé supporte au moins deux composants électroniques tels que deux circuits intégrés ou microcontrôleurs par exemple, une puce de carte à puce sans contact et un microcontrôleur pour capteur biométrique et/ou un générateur de numéro à usage unique et/ou un générateur de code DCVV (cryptogramme de carte bancaire variable dynamiquement), et/ou un contrôleur d'affichage au moins deux microcontrôleurs électroniques.

D'autres composants tels que super-capacitance, capacités, batterie, boutons, clavier, écran, buzzer, capteur biométrique, puce ou contrôleur NFC, mémoires, élément de sécurité, diodes Leds, antennes RF ou UHF, peuvent être également connectés au circuit imprimé. Les circuits imprimés peuvent être fournis avec des composants soudés dessus ou juste sous forme de substrat gravé (ou métallisé) avec des pistes et des plages conductrices d'interconnexion.

Certains composants électroniques peuvent être connectés ultérieurement quand le circuit imprimé est dans son logement ou après stratification de couches par usinage de cavité et encartage comme par exemple pour un module de carte à puce ISO 7816-2 ou un afficheur ou un capteur biométrique.

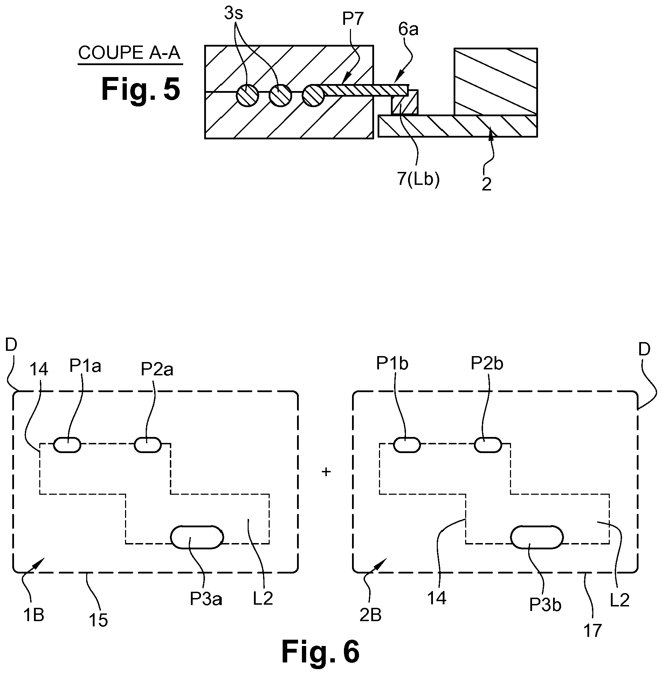

Afin d'insérer les circuits imprimés dans une structure-cadre, le procédé peut comprendre selon un premier mode, soit la fourniture ou réalisation (étape 140 bis) de cette structure-cadre (figs. 3A, 3B, 3C, 12) avec au moins un (ou plusieurs) logement(s) ou emplacement(s) de circuit imprimé(s)), soit la construction (figs. 6-10 ; étapes 100-140 figs. 13) d'une telle structure-cadre selon un second mode préféré, décrits ci-dessous.

Le premier mode prévoit dans les exemples illustrés (figs. 3A-3C), la fourniture (étape 140bis, fig. 12) d'une structure cadre ayant déjà des zones évidées, ouvertures, fenêtres de surface correspondant chacune à des logements de réception (ou emplacement) ou encombrement d'un circuit imprimé 2. Les logements sont effectués de manière à avoir un jeu ou espace E autour de chaque circuit imprimé (par exemple de 0,5 à 5 mm).

Le second mode préféré du procédé prévoit une étape 100 (figure 13), alternative, de construction pour former ladite structure-cadre, notamment en réalisant des zones évidées (fenêtres, évidements, ouvertures...) sur une feuille de base 1B (et le cas échéant, (étape 110) également sur une feuille de recouvrement 2B ici en matière plastique, notamment en PVC ;

Ces zones évidées (trous oblongs) sont situées à des endroits prédéterminés correspondant à des connexions ou des fixations du circuit imprimé 2 par des ponts conducteurs. Elles peuvent être réalisées notamment par découpe ou poinçonnage, emboutissage ou autre usinage au moins partiel de la feuille de base ou autre substrat.

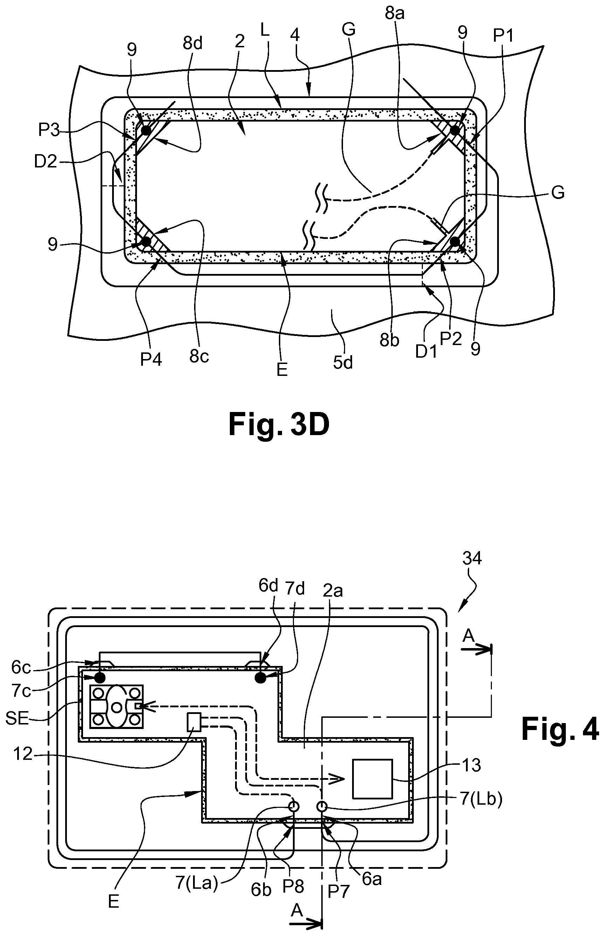

Pour l'insert du second mode à la figure 4, les zones évidées L2 (ouvertures L2) sont réalisées en deux / trois temps (étapes 100, 110, 140).
- Dans un premier temps (100), des petites zones évidées (trous oblongs) P1a, P2a, P3a sont réalisées à des endroits prédéterminés d'une première feuille de base 1B ; (Des petites zones évidées P1a, P2a, P3a (1 x 1,5 cm) peuvent être réalisées de préférence dans une feuille de base 1B et en correspondance (P1b, P2b, P3b) également dans une feuille de recouvrement 2B).
- A l'étape 120, un parcours de fil conducteur est réalisé sur la feuille de bas 1B de manière à former des ponts traversant les petites zones évidées (trous oblongs P1a, P2a, P3a) ;
- A l'étape 140, dans un second temps, le procédé peut prévoir de réaliser des plus grandes zones évidées (ouvertures L2) correspondant sensiblement à l'emplacement des circuits imprimés et représentant environ (par exemple 2,5 cm x 6 cm) au moins 30 % de la surface standard d'une carte à puce (85,6 mm X 54 mm) ;

Les grandes zones évidées L2 peuvent être réalisées directement dans la feuille de base 1B (mais également dans la feuille de recouvrement 2B si cette dernière est déjà laminée sur la feuille de base en prenant le parcours de fil conducteur en sandwich, comme indiqué à l'étape 120 (fig. 13) facultative mais préférée, en pointillée).

Enfin, à l'étape 150 sensiblement commune aux deux modes, ensuite, le procédé comporte de fixation d'un circuit imprimé dans chaque logement L, L2 ou un emplacement prédéfini de la structure-cadre ; Des ponts P1, P7 relient chaque circuit imprimé 2, 2a à chaque structure-cadre 1, 3B. Les ponts P1-P7 peuvent avoir une fonction mécanique de maintien ou positionnement de chaque circuit imprimé dans son logement ou emplacement (pas nécessairement traversant une feuille de base).

Il peut exister généralement un espace ou jeu E autour du circuit imprimé dans son logement L, L2 entre les parois interne ce dernier et la périphérie du circuit imprimé.

Dans l'exemple du premier mode, figure 3A, 3B, 3C, le circuit imprimé 2 est placé dans l'évidement L et fixé à l'aide de ponts P1, P2 qui s'étendent dans les angles en coupant les angles à l'intérieur de l'emplacement L ou 4 du circuit imprimé.

Les ponts P1, P2 relient ledit circuit imprimé à la structure-cadre 1. Les ponts P1, P2 sont fixés sur la structure-cadre 1 à proximité du bord du logement L puis ils survolent un angle 5 du circuit imprimé positionné dans l'angle du logement correspondant et les ponts sont fixés à nouveau à la structure-cadre après avoir passé l'angle 5.

En pratique, le parcours conducteur électrique peut être formé avant ou après insertion de chaque circuit imprimé dans son logement. Si le circuit est déjà placé dans son logement, le procédé peut prévoir préférentiellement de souder les ponts aux plages d'interconnexion du circuit imprimé juste après le survol des plages d'interconnexion 8a, 8b. Ici, la partie en l'air dans l'angle 5a et sensiblement centrale des ponts P1 fixe le circuit imprimé 2 par soudure 9.
Le cas échéant, en cas de gainage des fils, ce dernier peut être éliminé localement par la soudure à ultrasons ou thermocompression.

La fixation du pont sur le circuit imprimé peut être effectuée avec une colle conductrice ou une soudure 9 ou autre moyen permettant préférentiellement de conduire l'électricité. La fixation peut être une colle isolante entre le circuit imprimé et le pont P1 de manière à former un condensateur notamment par zigzags ou alternances de ponts passant au-dessus des plages 8a, 8b ces dernières pouvant former des plaques de condensateur.

Dans l'exemple du second mode, illustré figure 4, les ponts P7, P8 sont construits différemment. Ils comprennent des conducteurs électriques filaires pour former une liaison électrique au circuit imprimé. Les conducteurs électriques peuvent être des fils électriques gainés ou non d'isolant.

Les ponts ont une extrémité libre 6 s'étendant à l'intérieur de l'emplacement L ou 4 du circuit imprimé pour le relier au niveau d'une plage d'interconnexion ou de contact électrique 7 du circuit imprimé et par continuité de pistes jusqu'à un microcontrôleur NFC ou radiofréquence 12.
Les ponts P7, P8 sont fixés également à la structure de base 3B (ou structure-cadre) ici par incrustation de fil.

Selon une caractéristique du mode préféré, la structure-cadre 2, 2a comprend un circuit électrique / électronique 3, 16 avec des pistes conductrices 3s, 16 et en ce que lesdits ponts et lesdites pistes 3s, 16 sont formés avec la même technique.

Dans les deux modes, le circuit électrique / électronique comprend une antenne filaire 3 avec comme pistes des spires 3s. Les ponts P1, P2 et P7, P8 et les pistes d'antenne 3s sont formées ici par technique filaire d'incrustation de fil conducteur.

L'antenne 3 est reliée (ou connectée) au circuit imprimé via lesdits ponts d'une part P1, P2 et d'autre part P7, P8 directement par contact ohmique comme sur les figures 3, 3bis et fig. 4.

Alternativement, (non représenté) le circuit électrique / électronique peut être connecté (ou couplé) de manière capacitive ou inductive. Par exemple, l'antenne 3 peut être du type passif (ou antenne relais) servant à amplifier le signal d'une antenne (ou bobine) de transpondeur radiofréquence disposée sur le circuit imprimé ou gravée sur une puce radiofréquence soudée au circuit imprimé. Dans ce cas, l'antenne 3 de la structure-cadre peut être couplée de manière inductive (ou à la manière d'un transformateur) avec une bobine ou antenne (non représentée) disposée sur le circuit imprimé directement ou via une puce radiofréquence à bobine gravée.

Les ponts P1-P7 peuvent relier une plaque de condensateur disposée sur une face de la structure-cadre tandis que qu'une autre plaque disposée sur la face opposée est reliée à une antenne.

Ainsi, avec une antenne relais sur la structure-cadre 1, 3B, les ponts P1-P7 peuvent juste servir mécaniquement à fixer ou positionner, le circuit imprimé à la structure cadre. Cependant, l'invention a permis avantageusement de réaliser ces ponts mécaniques avec la même technique que celle utilisée pour réaliser le circuit électrique sur la structure-cadre ou celui sur le circuit imprimé.

Des ponts peuvent servir à relier des plages d'interconnexion du circuit imprimé à une piste de redirection 16 qui s'étend sur la structure-cadre 3B avant de revenir sur le circuit imprimé pour connecter un ou deux composants. Ainsi, cela offre des possibilités de connexion et simplification du circuit électrique du circuit imprimé.

Dans tous les exemples des figures, le circuit électrique / électronique peut comprendre une antenne 3 avec des spires ou pistes qui sont fixées sur la structure-cadre notamment par incrustation de fil ou autre technique.

Alternativement, le circuit électrique / électronique 3, 3s (notamment antenne) peut être réalisé par gravure sur la structure cadre, ou par métallisation quelconque. La connexion du circuit 3 au circuit imprimé peut être réalisée par une technique de fil soudé via un pont également en fil soudé ; La technique de connexion par fil soudé (wire bonding en anglais) bien connue dans le monde carte à puce, peut être utilisée également en même temps ou successivement, pour connecter un quelconque composant sur le circuit imprimé notamment lorsqu'il est inséré nu (sans composant) dans son logement. Alternativement, des lames ou bandes plates métalliques soudés peuvent être utilisées à la place des fils soudés ronds.

Ainsi, les ponts et le circuit imprimé peuvent utiliser la même technologie de connexion par fils ou lames soudées.

Tout ou partie des pistes du circuit 3 peut être effectuée par impression (dépôt de matière conductrice, jet de matière conductrice, sérigraphie ou autre technique connue de l'homme de l'art) jusqu'au bord périphérique interne de l'emplacement ou logement. De même, tout ou partie du circuit imprimé peut être réalisé par impression comme ci-dessus jusqu'au bord périphérique externe du circuit imprimé. Et les ponts conducteurs peuvent être formés également par impression entre la structure cadre et le circuit imprimé dans l'espace (jeu ou interstice) E.

La viscosité de la matière conductrice et le jeu peuvent être adaptées pour se maintenir sur place. Le procédé peut utiliser des rayons ultraviolets UV sur une résine conductrice polymérisant aux UV, afin d'aider à geler et réaliser le pont.

Ainsi, l'invention permet de déporter tout circuit (notamment l'antenne), du circuit imprimé à la structure cadre et d'avoir des ponts conducteurs et tout ou partie des circuits du circuit imprimé ou de la structure-cadre réalisé(e) par une technique d'impression.

La connexion et/ou les ponts peuvent être effectués à l'aide de matière conductrice électrique adhésive. Elles peuvent être notamment anisotropiques (liquide ou solide : ACF / ACP) ou simplement par contact électrique ou pâte de soudure électrique. Alternativement, le fil conducteur peut être fixé sur la structure-cadre 1 par une technique autre que l'incrustation notamment par couture, broderie. La structure-cadre peut comprendre une structure tissée non tissée enduite ou non à cet effet.

L'antenne peut être déposée sur la structure-cadre (ou feuille de base) après une découpe de pistes conductrices (ou spires) dans une feuille métallique seule ou supportée par un substrat isolant.
L'invention peut prévoir tout autre circuit électrique et /ou électronique avec des composants sur la structure-cadre.

L'antenne peut être de type UHF ou conforme à une communication selon l'ISO 14443.

Comme indiquée ci-dessus, l'antenne peut être reliée électriquement au circuit imprimé par une liaison électrique ou inductive ou capacitive.

L'antenne 3 peut constituer une antenne passive pour une autre antenne reliée à un transpondeur ou microcircuit radiofréquence du circuit imprimé. Ainsi, la liaison entre les deux antennes peut être inductive ou de type transformateur. Les fils des deux antennes peuvent avoir des interactions de type capacité inter spires.

Grâce à l'invention, l'antenne réalisée sur la structure-cadre présente une largeur la plus importante pour de meilleure performance ou couplage avec un lecteur de communication notamment à champ proche de type NFC Near Field Communication).

L'invention permet également de réaliser tout circuit électronique / électrique sur la structure cadre, en y plaçant notamment une capacité sous forme de puce intégrée de type SMD, ou des leds ou tout autre composant complémentaire au circuit imprimé.
Ainsi, la structure-cadre peut être électriquement liée au circuit imprimé autrement que par des ponts appartenant à des portions terminales d'une antenne.

Les ponts conducteurs peuvent être fixés mécaniquement par incrustation, collage ou laminage sur la structure cadre puis fixés et connectés par soudage ultrasons, thermocompression, laser ou soudage / brasage à des plages conductrices ou métallisations sur le circuit imprimé.

Les ponts P1-P7 peuvent avoir une liaison électrique avec le circuit imprimé 2, 2a réalisée notamment par un soudage de type thermocompression, ultrasons, laser ou un brasage avec alliage à base d'étain ou un collage de type conducteur 9.

Grâce à l'invention, au moins le circuit électrique / électronique 3 et les ponts conducteurs P1 - P7 peuvent être formés par une même technique filaire d'incrustation.

Ainsi, à un même poste d'incrustation de fil par ultrasons, l'antenne peut être réalisée pratiquement en même temps que les ponts de liaison P1 - P7. L'étape manuelle de fixation de ruban adhésif peut ainsi être remplacée par des liens filaires électriques de manière automatisée.

Une fixation mécanique du pont peut être effectuée par incrustation du fil du pont dans la matière plastique de la structure-cadre ; L'autre fixation mécanique peut être réalisée par une soudure électrique à ultrasons ou thermocompression ou brasure sur une plage d'interconnexion ou de contact conductrice 7 (obtenue notamment par gravure de cuivre) sur le circuit imprimé 2.

Le substrat du circuit imprimé peut être en polyimide (de marque kapton) de 50 - 70µm d'épaisseur environ.
Les ponts, bien que fixés mécaniquement par incrustation à la structure-cadre, ils peuvent relier électriquement, par une continuité homogène des pistes en fil conducteur du circuit électrique /électronique de la structure-cadre.

Bien que fixé mécaniquement au circuit imprimé 2, 2a par soudure ou colle conductrice, ils peuvent également servir à relier électriquement des pistes ou plages conductrices d'un circuit imprimé.

Ainsi, sur les figures 3A, 3B, 3C, les ponts P1, P2 peuvent être connectés par soudure électrique aux plages d'interconnexion 8a, 8b du circuit imprimé localisées dans l'angle 5 a, 5b du circuit imprimé sous le fil de pont. Le même poste ou même machine d'incrustation peut remplir la fonction d'incrustation, de découpe et le cas échéant de soudure de fil au niveau des ponts sur le circuit imprimé. La soudure peut être effectuée aussi sur un poste distinct de celui d'incrustation de fil.

A la figure 3A, les ponts de gauche P3 et P4 survolent les angles restants du circuit imprimé. Les ponts servent de point d'appui supplémentaire ou bloquent en rotation le circuit imprimé.

Les ponts P3 et P4 peuvent être fixés au circuit imprimé par incrustation au moins partielle (selon l'épaisseur) ou par soudure via la même ou autre machine que celle réalisant l'antenne par incrustation. Le cas échéant, les angles du circuit imprimé peuvent comporter des plages métalliques uniquement pour permettre une fixation mécanique des ponts P3 et/ou P4 par soudure.

Chaque pont P3 et P4 a pour fonction de servir d'appui au circuit imprimé et l'empêcher de pivoter lors d'un retournement ou autre manipulation de la structure-cadre 1. Un seul pont P3 peut être suffisant.

A la figure 3B, le circuit imprimé comprend sur ses angles de gauche des plages conductrices 8c et 8d comme celle 8a, 8b de la figure 3.

Ici, des portions de fils P5, P6 sont incrustés de part et d'autre de l'angle de la structure-cadre et survolent les plages 8c et 8d respectivement. Des soudures ou points de connexion électriques 9 sont réalisées par ultrasons ou thermocompression, de préférence au même poste que celui ayant réalisé l'antenne, pour connecter chaque pont sur sa plage 8c et 8d en regard.

Concernant le second mode de réalisation, (figs. 4 et 5), les ponts P7, P8 représentent ou comprennent les portions terminales 6a, 6b (ou extrémités) de l'antenne 3). Les portions terminales sont connectées respectivement à des plages ou plots d'interconnexion 7 (La) et 7 (Lb) reliés via des pistes électriques (comme celle référencée 11 de la figure 3C) à des plots correspondant d'une puce radiofréquence 12 pouvant être située dans le module SE ou ailleurs sur le circuit imprimé 2 comme sur la figure 4.

Les deux autres ponts P5, P6 sont de préférence fixés au circuit imprimé 2a. Pour le moins, ils peuvent servir de point d'appuis. On observe sur la figure 5 que l'antenne est avantageusement placée à un niveau plus bas (ou médian) par rapport aux composants du circuit imprimé 2, que si elle avait été incrustée en surface supérieure de la structure-cadre.
Tout circuit en surface supérieure du cadre pourrait être trop proche de la surface externe d'une carte à puce et être visible notamment par transparence.

Le procédé selon le premier mode fig. 3 A-3C) va être décrit ci-après en relation avec la figure 12.
- A l'étape 140 bis, le procédé prévoit une réalisation d'une pluralité de logements L de circuit imprimé dans au moins ladite feuille de base 1 en laissant des ponts conducteurs s'étendre dans le logement L; Une feuille de recouvrement avec ou sans ouverture correspondant au circuit imprimé peut être déposée après réalisation des ponts.

Dans l'exemple (fig. 3A-3D) pour fabriquer un insert, une moins une fenêtre L est donc ménagée dans une feuille de base 1 et les deux portions terminales (extrémités) P1, P2 d'une spirale 3 passent au-dessus de la fenêtre et sont incrustés sur chaque côté de la fenêtre L.
- A l'étape 150 subséquente, le second mode prévoit une insertion et connexion de circuit imprimé dans chaque emplacement ou logement ;
Dans l'exemple, un circuit imprimé sans-contact 2, de dimensions plus importantes qu'un module classique standard de carte à puce (par exemple au moins 2, 3, 4, 5 ou 6 fois plus), est placé dans la fenêtre L, sous les deux fils (ou portions terminales P1, P2).

Ensuite, intervient un raccordement 9 des portions terminales de l'antenne P1, P2 qui sont connectées électriquement à des bornes électriques 8a, 8b du circuit imprimé 2. Le circuit imprimé peut par exemple représenter une surface supérieure ou égale à environ 25% ou 50% voire une surface supérieure à 60% ou 80% de celle d'un insert (ou structure-cadre) ou de celle correspondante d'une carte à puce. Un circuit imprimé peut avoir de préférence une surface au moins 4 fois supérieure à celle d'un module à contacts conforme au standard ISO 7816-2 de carte à puce.

Les problématiques et difficultés d'intégration d'un module standard de carte à puce (d'environ 12 mm x 15 mm) à contacts ou sans contact sont très différentes de celles de l'intégration d'un circuit imprimé. Il n'a pas été envisageable pour l'homme de l'art de maintenir et de connecter un circuit imprimé de cette dimension comme pour un module standard de carte à puce. En outre, la manipulation, le report et la connexion électrique d'un circuit imprimé flexible de grandes dimensions à un circuit électrique / électronique situé sur une structure cadre sont très délicats et nécessitent un maintien mécanique pour permettre les opérations ultérieures de fabrication du support final.

L'invention est particulièrement adaptée pour des circuits imprimé (2, 2a) ayant une surface supérieure à 5 cm2 ou et/ou ayant une forme allongée avec une longueur supérieure ou égale à 3,5 cm et/ou étant formé de deux circuits imprimés de faibles dimensions (par exemple de dimensions de surface inférieures 2,25 cm2) interconnectés ensemble (notamment par des pistes électriques d'interconnexion déposées ou gravées sur un ruban ou une bande reliant mécaniquement les deux circuits imprimés) et s'étendant sur une longueur supérieure à 3,5 cm voire supérieure à 5 cm.

Les substrats diélectriques de module type carte à puce sont généralement extraits ou découpés de rubans d'une largeur de 3,5 cm.

Alternativement, le circuit imprimé 2 peut être déjà placé dans la fenêtre ou son logement et un circuit électrique (notamment d'antenne) est réalisé sur la structure-cadre.
Selon un mode simple de mise en oeuvre, un fil d'antenne est déposé en partie sur une structure-cadre 1 et connecté électriquement dans deux coins 5a, 5b, du circuit imprimé tandis que dans au moins un coin restant 5c, 5d, le fil d'antenne peut être fixé ou non au circuit imprimé.

Sur la figure 3A, l'antenne est réalisée par fil incrusté 3 dans une feuille de base 1 et les deux extrémités de l'antenne (portions terminales correspondant aux ponts P1, P2) sont reliées à deux contacts 8a, 8b dans le coin à droite du circuit flexible.
Pour les deux autres coins 5c, 5d sur la gauche, le fil 3 a une trajectoire dans les coins similaire à celle de la droite mais peut ne pas avoir de connexion électrique 9. Grâce à cette option, le circuit flexible fixé sur la droite est empêché de basculer dans la fenêtre L, notamment lors d'un retournement de la feuille de base.

Sur la fig. 3B, le circuit imprimé 2 a deux autres plages d'interconnexion (ou contacts) 8c, 8d sur ses deux coins de gauche et deux portions de fil P5, P6 sont incrustées sur la feuille de base de part et d'autre des coins respectifs 5C, 5d et sont connectés chacun à leur plage d'interconnexion respective 8c, 8d du circuit imprimé.

Dans ce cas, le circuit flexible peut être fixé à tous les quatre coins (ou angles) 5a, 5b.

Pour les deux autres coins 5c, 5d sur la gauche, le fil 3 a une trajectoire dans les coins similaire à celle de la droite mais peut ne pas avoir de connexion électrique 9. Grâce à cette option, le circuit flexible fixé sur la droite est empêché de basculer dans la fenêtre L, notamment lors d'un retournement de la feuille de base.

Sur la figure 3D, les références indiquées représentent des éléments identiques ou similaires aux autres figures.
L'antenne 4 est une spirale 4 ayant un parcours conçu de manière à ce que ses extrémités terminales se connectent sur les points de connexion 9 des plages d'interconnexion 8d et/ou 8C après avoir connecté la plage 8b.

Les plages 8d et 8C sont indépendantes du reste du circuit imprimé. Elles peuvent être connectés électriquement par des points 9 (notamment par une soudure 9) à l'une au moins des plages d'interconnexion 8c, 8D pour maintenir le circuit imprimé en position. Selon la dimension du circuit imprimé, un seul (voire deux point) peut être suffisant.

On préfère toutefois fixer le circuit imprimé 2 avec au moins un troisième point qui peut être sur la plage 8c et/ou 8d afin de bien le maintenir pendant des éventuelles manipulation ou pivotement ou retournement de la feuille 1.

L'autre extrémité d'antenne connecte la plage 8a comme à la figure 3A.

Le circuit imprimé 2 peut ou non comprendre des composants déjà connectés sur des pistes G ou plages électriques d'interconnexion de composants gravées ou imprimées sur le circuit. Les composants peuvent être rapportés ultérieurement après positionnement du circuit imprimé dans la structure-cadre.

Le procédé peut prévoir une étape optionnelle de séparation ou de découpe des bouts de fils d'antenne (ou autre circuit électrique). Elle peut comprendre une étape 145 de découpe ou de séparation (D1, D2) de bouts de fil d'antenne (P3, P4) après des points de connexion électrique ou fixation mécanique (9) au circuit électrique. Ces bouts ou extrémités ou ponts P3, P4 ont la fonction de fixer mécaniquement les plages 8C et/ou 8D au cadre-support. Le cas échéant, ils peuvent aussi réaliser une fonction de décharge électrique des charges du circuit imprimé vers la structure-cadre.
- A l'étape 160 (optionnelle en pointillés), le procédé du premier mode prévoit un recouvrement du circuit imprimé avec une résine ou une feuille de lamination sur le circuit imprimé formant un insert. Dans l'exemple, (non représenté), l'invention peut prévoir de laminer une feuille de dessous sous le circuit imprimé, puis le versement d'une résine de remplissage sur le circuit imprimé et le cas échéant également sur toute le structure-cadre ; Ensuite, une autre feuille de couverture peut venir recouvrir l'ensemble de la structure-cadre et enfermer les circuits imprimés.

Alternativement, le procédé peut prévoir de fixer une feuille de dessous sous la structure-cadre 1 complétée avec les circuits imprimés 2 connectés puis de fixer une seconde feuille d'assemblage Ibis avec des logements correspondants à ceux de la première feuille de base 1 (fig. 1).

De la résine est versée dans les logements de circuit imprimé jusqu'à remplir les logements de la seconde feuille d'assemblage pour former un insert.

A l'étape 170, le cas échéant, au moins une (ou deux) feuille de couverture peut être laminée sur cette feuille d'assemblage pour former un insert.

Les inserts ainsi formés peuvent être incorporés entre des feuilles habituelles de passeport, de carte à puce ou autres.

Des opérations habituelles peuvent être réalisées comme des usinages de cavités de réception de module SE de carte à puce à contacts et/ou sans contact pour l'y insérer ultérieurement. L'invention peut prévoir aussi de ménager des cavités de réception de capteur d'empreinte 13 et d'y insérer et connecter ce capteur.

Ce premier mode de mise en oeuvre peut présenter l'inconvénient d'avoir le fil d'incrustation que sur un côté de la carte si la structure demeure asymétrique. Il peut en résulter, selon le diamètre du fil, l'apparition d'une image fantôme du fil de l'antenne sur la carte après stratification (ou lamination). Le second mode préféré ci-dessous ne présente pas cette asymétrie.

### Procédé selon le second mode préféré (fig. 4 - 12).

Il est décrit ci-après en relation avec des étapes figurant_dans l'organigramme (fig. 13). Les étapes en pointillés sont facultatives 110, 130, 160.
- A l'étape 110, le procédé du second mode prévoit la réalisation d'une pluralité de zones évidées (trous ou d'ouvertures), sur une feuille de base 1B au moins au niveau des ponts conducteurs P5-P7 ;

Dans l'exemple, à la figure 6, des trous oblongs (évidements ou fenêtres) P1a, P2a, P3a sont réalisées sur une feuille de base 1. Les feuilles 1B (inférieure) et 2B (supérieure) a par exemple une épaisseur de 210-240 µm. Les composants peuvent avoir une épaisseur de 400 µm par exemple.
Les trous P1a, P2a, P3a sont situés au niveau des futurs ponts P5-P7. Les trous chevauchent sensiblement la périphérie 14 de l'emplacement (ou logement) L2 du circuit imprimé. Les trous peuvent s'étendre à la fois sur une zone réservée (ou résiduelle) de structure-cadre 1B et l'emplacement L2 du circuit imprimé.

Les trous peuvent permettent notamment de faciliter le découpage des ponts P1-P7 ultérieurement avec une longueur de fil conducteur pouvant s'étendre suffisamment sur le circuit imprimé jusqu'au point de connexion prédéterminé associé. Les trous peuvent s'étendre uniquement sur l'emplacement du circuit imprimé L2 et avoir un bord en limite de l'emplacement L2.
- A l'étape 110, le procédé du second mode prévoit la réalisation d'une pluralité de zones évidées correspondant aux précédentes, sur une feuille de recouvrement 2B ;

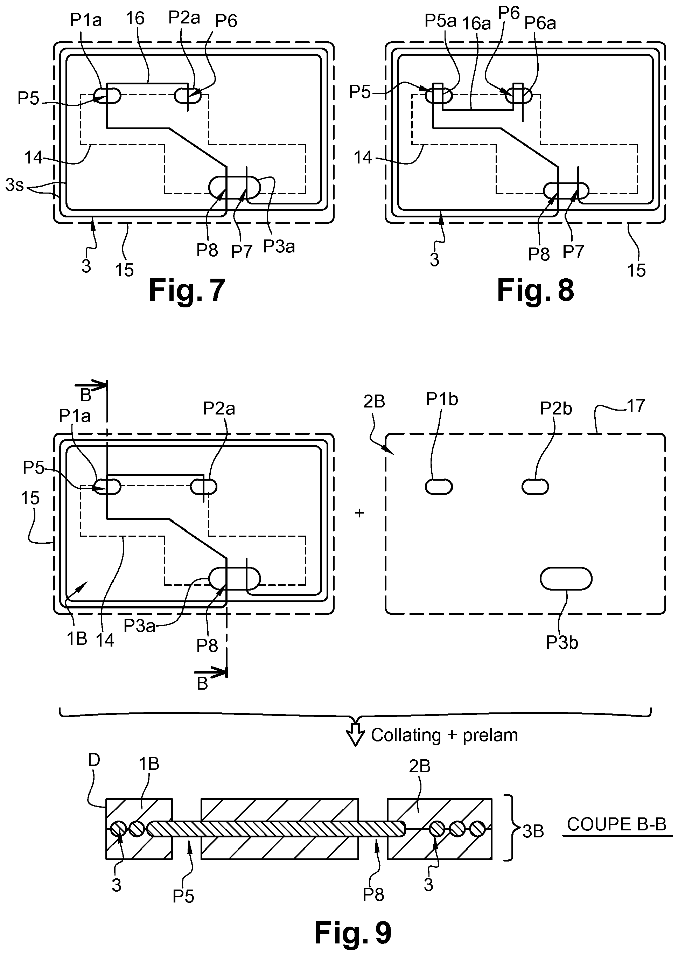

Dans l'exemple, des trous P1b, P2b, P3b identiques aux précédents P1a, P2a, P3a sont de préférence réalisés également sur une feuille de recouvrement 2B (identique à la feuille de base 1B) pour couvrir l'antenne 3 et la positionner au centre de la structure résultante 3B pour des questions de contraintes mécaniques (fibre neutre) et/ou de dissimulation de l'antenne afin d'éviter des images fantômes. Le recours à cette feuille 2B est facultatif mais préférée pour question de hauteur de composants et de résine de remplissage. Autrement, les fils d'antenne et ponts se trouveraient localisés à un niveau proche de la surface externe d'une carte et risqueraient d'être visibles.
- A l'étape 120, le procédé prévoit la réalisation de circuits électriques sur la feuille de base 2B en passant au-dessus des zones évidées P1a-P3a;
Dans l'exemple à la figure 7, un parcours d'antenne 3 (gainée d'isolant) est réalisé sur la feuille de base 1B (ou structure-cadre avant réalisation de logement L2) et comporte des ponts P5-P7 passant au-dessus des trous P1b, P2b, P3b ; Le fil se fixe par incrustation de part et d'autre de chaque trou. Le trou P3a est parcouru par une première portion terminale de l'antenne P8 (début ou fin de parcours) puis l'antenne est réalisée ; Ensuite, la dernière spire extérieure traverse les spires 3s en direction du trou P3a, se dirige vers le trous P1a pour le traverser en le survolant par-dessus, puis se dirige vers le dernier trou P2a en étant incrusté dans la structure-cadre, puis survole le trou P2a en direction de l'intérieur de l'emplacement du circuit imprimé et s'incruste dans la feuille de base à l'intérieur de l'emplacement. Grâce à l'invention on peut guider le fil de manière continue du début jusqu'à la fin du motif, ce qui améliore la productivité.

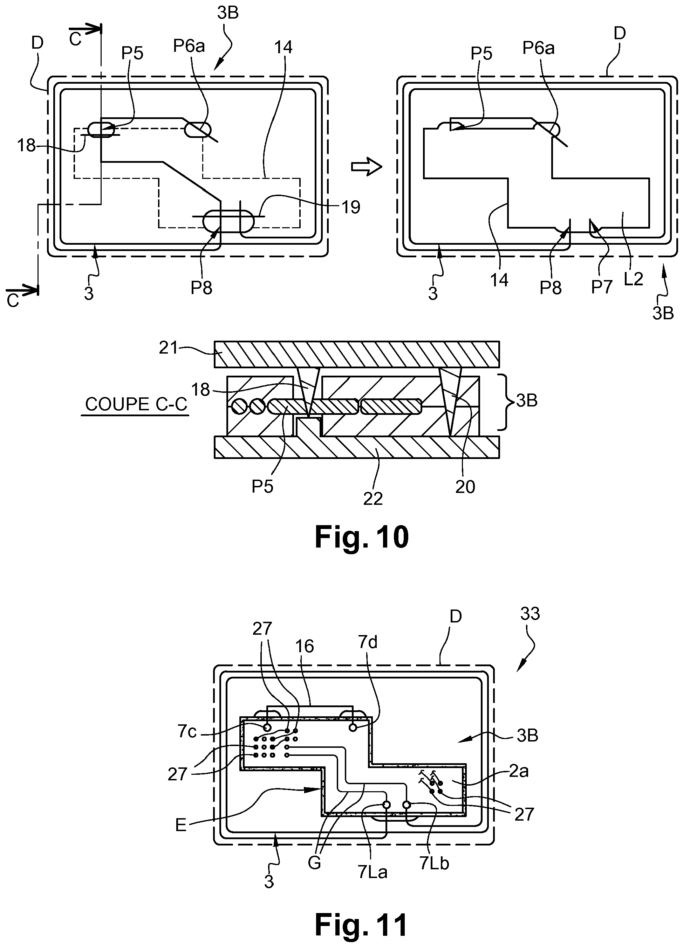

A la figure 8, un parcours alternatif diffère du précédent en ce qu'il comprend un aller-retour (P5, P5a) et (P6, P6a) du fil au-dessus des trous P1a et P2a. La portion de fil qui s'étend entre les deux trous supérieurs P1a et P2a dans le cadre support s'étend désormais dans l'emplacement du circuit imprimé.
- A l'étape 130, le procédé prévoit un assemblage de la feuille de base 1B avec celle 2B de recouvrement en recouvrant le circuit électrique 3s ou parcours 16, 16a;
Dans l'exemple (fig. 9), la feuille de base 1B est recouverte par la feuille de recouvrement 2B en ayant leurs trous en correspondance pour une lamination et assemblage. L'antenne 3 et les ponts demeurent avantageusement positionnés entre les deux feuilles au niveau de la fibre neutre de l'assemblage.
- A l'étape 140, le procédé du second mode prévoit (comme pour le premier mode) une réalisation d'une pluralité de logements de circuit imprimé dans au moins ladite feuille de base 2B (ou des deux feuilles 3B) en laissant des ponts conducteurs P5-P8 s'étendre dans le logement L2;
Dans l'exemple (fig. 10), le logement L2 du circuit imprimé 2a est découpé notamment par poinçonnage. De préférence, dans la même opération de découpe, les ponts P5-P7 peuvent être sectionnés.
L'invention permet grâce aux trous P1a, P2a, P3a de sectionner les ponts qui les traversent, en préservant une bonne longueur de fils qui s'étend jusqu'à l'intérieur de l'emplacement L2 du circuit imprimé au-dessus ou en regard des plages d'interconnexion des ponts.
Sur la coupe C-C, est illustré un outil de poinçonnage ou de découpe avec des lames 18, 20. Ces lames permet de couper les segments de découpe 18, 19 et contour 14 en pointillés de l'emplacement du circuit imprimé.
Les inserts peuvent être extraits par poinçonnage sur la ligne en pointillés D sur les figures 6 à 11.
Ainsi, l'invention permet de fournir une structure support bas coût ayant sensiblement l'épaisseur du circuit imprimé avec ses composants et des ponts conducteurs placés sensiblement au milieu de l'épaisseur de la structure-cadre.

Certains de ces ponts conducteurs peuvent juste servir à supporter ou fixer le circuit imprimé tandis que d'autres font partie d'un circuit électrique s'étendant sur la structure support et/ou le circuit imprimé.

Grâce à un cadre profond, des composants électroniques épais du circuit imprimé peuvent être plus facilement noyés dans de la résine de remplissage à l'intérieur du logement de la structure-cadre.

En outre, les fils, pistes ou ponts conducteurs notamment filaires sont moins visibles en surface de la carte obtenue. D'autres ponts conducteurs comme ceux susvisés mais à un autre niveau de hauteur peuvent s'étendre à partir de la paroi interne de la structure-cadre pour connecter ou fixer un autre circuit imprimé ou autre composant du même circuit imprimé. Cette disposition permet de réaliser ou implanter un second circuit électrique dans la structure cadre à un niveau différent d'un premier circuit électrique sans le gêner et de libérer de la surface d'un circuit imprimé placé dans la structure-cadre.

L'invention peut prévoir des circuits électriques (tels des antennes) à différents niveaux dans plusieurs structures-cadres superposées et un ou plusieurs circuits imprimés logé(s) dans la cavité résultante des structures-cadres superposés.

Chaque circuit de la structure cadre peut relier ou non électriquement un circuit imprimé logé dans la cavité.
Par exemple, une antenne relais (ou passive) peut être disposée à un premier niveau de hauteur ou d'épaisseur d'une structure cadre et le circuit imprimé peut comprendre une puce radiofréquence reliée électriquement à une antenne de transpondeur. L'antenne relais, amplifie les communications du circuit transpondeur du circuit imprimé par couplage électromagnétique (sans contact ohmique). Ainsi, dans tous les modes de réalisation ayant des circuits électriques sur plusieurs niveaux, il n'est pas nécessaire d'avoir des ponts conducteurs reliant un circuit de la structure cadre à un circuit électrique du circuit imprimé. Tout moyen de maintien en position (ou pont non conducteur) peut être utilisé pour maintenir le circuit imprimé dans une cavité de structure cadre.

Aussi, selon un mode de réalisation, un premier circuit électrique situé à une hauteur de structure cadre peut relier électriquement un ou plusieurs circuit imprimé disposé à l'intérieur de la structure cadre, tandis qu'un second circuit électrique disposé à une hauteur ou couche (strate) différente de la structure cadre peut relier électriquement un ou plusieurs circuits imprimés disposés à l'intérieur de la structure cadre.

On peut également avoir un premier des circuits électriques situé à un niveau de la structure cadre qui est couplé en sans-contact (électro magnétiquement ou via connexion capacitive) avec le ou les circuits imprimés situés dans la cavité tandis qu'un second circuit électrique situé à un niveau différent (ou couche ou strate du précédent) est relié de manière ohmique à un des circuits imprimés situé dans la cavité.

Ces différents aspects de l'invention relatifs à des circuits électriques disposés à des niveaux, (strates ou couches) différents de la structure-cadre peuvent être totalement indépendants des concepts ou modes de réalisation de l'invention utilisant des ponts conducteurs. Les ponts conducteurs deviennent facultatifs dans ces cas.

Le cas échéant, la découpe peut s'effectuer en ayant placé au préalable des tampons ou des supports 22 dans les trous ou sous l'assemblage 3B pour faciliter la découpe.
- A l'étape 150, le procédé du second mode prévoit une insertion et connexion de circuit imprimé 2a dans chaque emplacement ou logement L2;

Dans l'exemple à la figure 11, la structure-cadre résultant de l'assemblage 3B et découpe L2 est placée de manière à avoir chaque circuit imprimé 2a positionné dans son logement L2. Les ponts P5-P7 ont chacun une portion terminale 6a, 6b, 6c, 6d qui se trouve alors en regard d'une plage d'interconnexion (ou plot) 7(La), 7 (Lb), 7c, 7d) qui leur est destinée ou associée.
Le circuit imprimé 2a peut être placé dans son logement avec ou sans les composants mais juste des pistes G et plots d'interconnexion 27 pour interconnecter tout composant requis, tel un module ou un bornier de contacts à gauche du circuit 2a et un capteur d'empreinte à droite.

Les ponts P5, P7 peuvent alors être soudés ou connectés, de préférence par ultrasons ou thermocompression, à l'aide d'une même machine (ou pas) que celle ayant réalisée l'antenne et/ou de manière automatique

Une tête de soudure de la machine d'incrustation (ou associée à la machine) peut exercer le transfert d'énergie directement sur le fil conducteur contre les plages d'interconnexion ou inversement exercer une soudure à l'aveugle en exerçant le transfert d'énergie directement sur les plages d'interconnexion à travers le circuit imprimé.
Une enclume peut être placée dans les tous pour supporter chaque fil et la pression de l'outil ou thermode pendant la soudure.

Les ponts P1a et P2a, (distincts de ceux nécessaires à la connexion des plots La, Lb d'une puce radiofréquence), peuvent ne pas être soudés à des plages respectives. Dans ce cas, les ponts peuvent servir juste à empêcher un basculement du circuit imprimé comme dans le premier mode de mise en oeuvre.

On obtient également dans ce mode de réalisation un circuit imprimé 2a lié électriquement de la structure-cadre via l'antenne 3.

Ensuite, le procédé du second mode peut prévoir les étapes 160 et 170 sensiblement comparables à celles décrite en relation avec le premier mode.

L'invention permet de disposer en plus de l'antenne principale en bordure de la périphérie de la structure-cadre ou (en bordure de logement dans la structure-cadre), une seconde antenne qui peut, par exemple être utilisée pour une personnalisation électrique d'un composant de sécurité du circuit imprimé ou autre communication avec tout autre composant ou transpondeur radiofréquence.

Les antennes (ou autres circuits électriques) peuvent être disposées avantageusement à des niveaux différents de feuille de base (ou sur des feuilles différentes formant la feuille de base) mais aussi sur des structure-cadres différents et superposés, pour notamment éviter des chevauchements d'antennes (ou d'autres circuits électriques).
Le recours à un placement de circuits électriques à des niveaux différents, permet d'éviter encore plus des encombrements et coûts inutiles d'un circuit imprimé de grandes dimensions. En effet, l'antenne (ou toute piste de circuit imprimé) très encombrante généralement gravée sur le circuit imprimé peut être déportée sur un cadre périphérique. L'antenne (ou tout autre piste) peut être réalisée économiquement par fil incrusté.

Ainsi, l'invention permet de libérer plus de place sur le circuit imprimé (notamment celle prise par l'antenne) pour y placer d'autres composants ou pour réduire la surface du circuit imprimé afin de diminuer son coût ou pour faciliter son insertion et connexion électrique dans l'insert.

Grâce à l'invention, il est possible d'avoir un circuit imprimé flexible comportant notamment deux circuits imprimés de dimensions réduites et reliés ensemble, par exemple à l'aide d'un ruban conducteur ou autre élément d'interconnexion. Leurs dimensions peuvent être par exemple, chacune comprises entre 4 cm2 et 6 cm2, voire entre 5 cm2 et 8 cm2. Le circuit imprimé peut comprendre un microcontrôleur, une puce radiofréquence, des pistes et/ou d'interconnexion, des métallisations.

L'invention peut avantageusement servir pour interconnecter un circuit imprimé de grandes dimensions flexible (supérieur à 2 cm2) à un autre circuit imprimé de quelconques dimensions.

L'insert peut être intégré dans un dispositif portable à puce multi-composants. Un tel dispositif portable peut être notamment choisi parmi une carte biométrique à interface duale, une carte à capteur d'empreinte digitale à interface duale, une carte à capteur d'empreinte digitale sans contact, un passeport sans-contact à capteur d'empreinte digitale, une carte à afficheur, une carte multi-composants.

## Revendications

1. Procédé de réalisation d'un insert électronique (30-33) pour support portable multi-composants, ledit procédé comportant une étape de fixation d'un circuit imprimé (2, 2a) pour plusieurs composants électroniques, dans un logement ou un emplacement (L, L2) d'une structure-cadre (1, D, 3B), des ponts maintenant en position ledit circuit imprimé relativement à ladite structure-cadre,
**caractérisé en ce que** lesdits ponts (P1-P7) comprennent des conducteurs électriques.

2. Procédé selon la revendication 1, **caractérisé en ce que** ledit circuit imprimé (2, 2a) a une surface qui est supérieure à 25 % de celle d'une structure-cadre individualisée.

3. Procédé selon l'une des revendications 1 ou 2, **caractérisé en ce que** ledit circuit imprimé (2, 2a) a une surface qui est supérieure à 5 cm2 ou et/ou a une forme allongée avec une longueur supérieure à 3,5 cm et/ou est formée de deux circuits imprimés de faibles dimensions inférieures 2,25 cm2 connectés ensemble et s'étendant sur une longueur supérieure à 3,5 cm.

4. Procédé selon l'une des revendications 1 à 3, **caractérisé en ce que** la structure-cadre (2, 2a) comprend un circuit électrique / électronique (3, 16) avec des pistes conductrices (3s, 16 et **en ce que** lesdits ponts (P1-P7) et lesdites pistes (1) sont formés avec la même technique.

5. Procédé selon l'une des revendications précédentes, **caractérisé en ce qu'**au moins lesdites pistes (3s, 16) du circuit électrique / électronique (2, 2a) et lesdits ponts conducteurs (P1-P7) sont formés par une même technique filaire.

6. Procédé selon l'une des revendications précédentes, **caractérisé en ce qu'**au moins lesdites pistes (3s, 16) du circuit électrique / électronique (2, 2a) et lesdits ponts conducteurs (P1-P7) sont formés par un seul fil continu suivant un seul parcours.

7. Procédé selon l'une des revendications précédentes, **caractérisé en ce que** ledit circuit électrique / électronique (2, 2a) sur ladite structure cadre comprend au moins une piste d'antenne, ladite antenne s'étendant en bordure périphérique de la structure cadre.

8. Procédé selon l'une des revendications précédentes, **caractérisé en ce que** ledit circuit électrique / électronique (2, 2a) comprend au moins une plage d'interconnexion ou de liaison de composant ou une plaque de condensateur ou un composant électronique ou au moins deux circuits intégrés ou deux microcontrôleurs électroniques.

9. Procédé selon l'une des revendications précédentes, **caractérisé en ce que** lesdits ponts (P1-P7) ont une liaison électrique avec le circuit imprimé (2, 2a) réalisée notamment par un soudage de type thermocompression, ultrasons, laser ou un brasage avec alliage à base d'étain ou un collage de type conducteur (9).

10. Procédé selon l'une des revendications précédentes, **caractérisé en ce qu'**il comprend une étape (140) de formation d'une structure-cadre (1, 3B) comprenant au moins un emplacement ou un logement de circuit imprimé et des ponts électriques (P1-P7) s'étendant à l'intérieur ou au-dessus de l'emplacement ou du logement (L, L2) du circuit imprimé (2, 2a).

11. Procédé selon l'une des revendications précédentes, **caractérisé en ce que** lesdits ponts (P1-P7) sont formés en passant au-dessus de l'emplacement ou d'au moins une fenêtre (L, L2) de ladite structure-cadre (1, 3B).

12. Procédé selon l'une des revendications précédentes, **caractérisé en ce qu'**il comprend les étapes suivantes :
- Réalisation (100) de zones évidées ou poinçonnées (P1a - P3a) à des endroits prédéterminés d'une première feuille de base (1B) ou (100) d'une feuille de base (1B) et (110) d'une feuille de recouvrement (2B);
- Réalisation (120) d'au moins un circuit filaire (3, 16, 16a) ou d'au moins un ou plusieurs motifs de circuit électriques sur la première feuille de base (1B) en passant au-dessus des zones évidées ou poinçonnées (P1a - P3a);
- Réalisation (140) d'au moins une structure-cadre (3B) par formation d'au moins un logement (L2) de circuit imprimé dans ladite feuille de base (1B), en laissant des ponts conducteurs (P1a-P3a) s'étendre dans chaque logement (L2);
- Insertion, connexion ou fixation (150) du circuit imprimé (2a) dans chaque logement (L2);
- Distribution (160) d'une résine ou lamination d'une feuille sur le circuit imprimé dans chaque logement (L2).

13. Procédé selon l'une des revendications précédentes, **caractérisé en ce qu'**il comprend les étapes :
- de formation (120, 140) d'un parcours (3) de circuit filaire sur ladite feuille de base (1, 1B) à l'extérieur ainsi qu'à l'intérieur de l'emplacement ou du logement (L, L2) du circuit imprimé (2, 2a),
- de formation (140) dudit logement (L, L2) de circuit imprimé par découpe ou poinçonnage de ladite feuille de base (1B) et de découpe des fils à l'intérieur du logement et en retrait de sa périphérie (14) de manière à présenter une extrémité libre (6a, 6b, 6c, 6d) de fil, formant un pont, qui s'étend en regard du logement.

14. Procédé selon l'une des revendications 12 ou 13, **caractérisé en ce qu'**il comprend une étape de découpe ou de séparation (D1, D2) de bouts de fil d'antenne (P3, P4) après des points de connexion électrique ou fixation mécanique (9) au circuit électrique.

15. Procédé selon l'une des revendications 12 à 14, **caractérisé en ce qu'**il comprend en outre l'étape suivante :
- Assemblage (130) de ladite feuille de base (1B) avec ladite feuille de recouvrement (2B) en superposant leurs zones évidées respectives (P1a-P3a) (P2b-P3b).

16. Insert électronique (31-33) pour support portable multi-composants (34), comportant un circuit imprimé (2, 2a) reliant plusieurs composants électroniques, fixé dans un logement (L, L2) ou emplacement de structure-cadre (1, 3B), des ponts (P1-P7) positionnant ledit circuit imprimé (2, 2a) à ladite structure-cadre,
**caractérisé en ce que** lesdits ponts (P1-P7) comprennent des conducteurs électriques.

17. Insert selon la revendication précédente, **caractérisé en ce que** la structure-cadre (2, 2a) comprend un circuit électrique / électronique (3, 16) avec des pistes conductrices (3s, 16 et **en ce que** lesdits ponts (P1-P7) et lesdites pistes (1 sont formés avec la même technique.

18. Insert selon l'une des revendications 16 ou 17, **caractérisé en ce que** ledit circuit électrique / électronique sur ladite structure-cadre comprend au moins une piste d'antenne (3s, 3).

19. Dispositif portable comportant un insert conforme à l'une des revendications 16 à 18.

20. Dispositif portable selon la revendication précédente choisi parmi une carte biométrique à interface duale, une carte à capteur d'empreinte digitale à interface duale, une carte à capteur d'empreinte digitale sans contact, un passeport sans-contact à capteur d'empreinte digitale, une carte à afficheur, une carte multi-composants.
